(19)

Europäisches
Patentamt
European
Patent Office
Office européen
des brevets

(11) **EP 3 073 131 A1**

(12) **EUROPEAN PATENT APPLICATION**
published in accordance with Art. 153(4) EPC

(43) Date of publication:
**28.09.2016 Bulletin 2016/39**

(21) Application number: **14863326.6**

(22) Date of filing: **14.07.2014**

(51) Int Cl.:
**F16B 43/00** (2006.01)    **F16B 19/08** (2006.01)
**F16B 37/04** (2006.01)

(86) International application number:
**PCT/JP2014/068728**

(87) International publication number:
**WO 2015/075963 (28.05.2015 Gazette 2015/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **22.11.2013   JP 2013242006**

(71) Applicant: **Newfrey LLC
New Britain, CT 06053 (US)**

(72) Inventor: **SAKODA Kanji
Toyohashi-shi
Aichi 441-8540 (JP)**

(74) Representative: **Haar, Lucas Heinz Jörn et al
Patentanwälte Haar & Schwarz-Haar
Lessingstrasse 3
61231 Bad Nauheim (DE)**

(54) **SWAGED COLLAR AND SWAGED NUT**

(57)    A swaged collar and a swaged nut that buckle in a fixed axisymmetric shape when a thin-walled portion at the tip end is buckled and attached to a resin part. The swaged collar (10) is equipped with: a sleeve, having a thick-walled section (12), which is thick, a thin-walled section (14), which is thin, and a step section (15) between the thick-walled section and the thin-walled section; and a flange (11), which is formed on the thick-walled-section side of the sleeve, and has a larger diameter than that of the sleeve. A through-hole (13) is formed penetrating the sleeve and the flange, the sleeve is inserted into an attachment hole (33) of a resin component (30), and then the thin-walled part is buckled to form a buckled part (14a), thereby sandwiching and attaching the resin component (30) between the flange and the buckled part. When the outer diameter of the thin-walled portion is D, the wall thickness is t, the length is L, and the Poisson ratio is $\gamma$, the following equations are satisfied:

$$r = (D - t)/2$$

$$m = \frac{L}{\pi^4 \sqrt{\dfrac{r^2 t^2}{12(1-\gamma^2)} \, 20}}$$

$$1.2 < m < 1.8$$

# FIG.6

## Description

## Technical Field

The present invention pertains to a metal swaged collar and swaged nut for attachment to a resin part. In particular, it pertains to a metal swaged collar and swaged nut with which, when the tip portions of a metal swaged collar and swaged nut are caused to buckle when attached to a resin part in order to prevent deformation or damage to the resin part, the shape of the inside diameter thereof is kept constant after buckling, and the inside diameter and outside diameter thereof are maintained in a concentric relationship with no skewing of their center axes.

## Prior Art

In general, when a resin part is fastened to an attached-to member with a bolt or the like, there is a risk of deformation or damage to the resin part, such as cracking. To prevent such deformation or damage to the resin part, a metal collar is installed in a through-hole for fastening the resin part, and the resin part is fastened to the attached-to member by a bolt or the like through that metal collar.
Methods for attaching a metal collar include a method whereby the metal collar is integrally molded by insert molding when the resin part is molded, and a method whereby the metal collar is attached after the resin part is molded.
For the first method, in which the metal collar is molded as a single piece, a complex die and extrusion molding machine are required.
In the latter method, in which the metal collar is attached after the resin part is molded, the metal collar is frequently deformed after being inserted into the resin part through-hole in order to prevent the metal collar from falling out of the resin part. In general, attachment of a metal collar is achieved either by pushing the metal collar in the axial direction using a press, thereby buckling and swaging the tip portion, or the metal collar is swaged using a hand-held tool. In the present Specification, a metal collar that is attached to a resin part or the like by pressing in the axial direction and causing the tip portion to buckle in this way is referred to as a "swaged collar."
The method for deforming a swaged collar in order to attach it to a resin part using a press requires a large press. The method for deforming a swaged collar and attaching it to a resin part using a tool enables the swaged collar to be deformed and attached to a resin part relatively simply.
However, in both the method for attaching a swaged collar using a press and the method for attaching a swaged collar using a tool, the swaged collar is buckled and attached, so abnormal buckling, such as when the swaged collar slopes in one direction when attached, can easily occur. There is also a tendency for shape variations to occur after buckling large numbers of swaged collars, making it difficult to obtain a constant shape. Hence, the problem arises that after buckling and attachment of the swaged collar, the inside shape does not form a circle, and the center axis of the inside diameter becomes offset from that of the outside diameter. When the inside diameter fails to form a circle or the center axes of the inside and outside diameters are offset after buckling, a bolt cannot be inserted, and attachment to the attached-to member can no longer be achieved.
Nuts in which a female thread is integrally molded into a resin part are known as insert nuts. Insert nuts are insert-molded, requiring a complex mold and injection molding machine. To attach a nut to a resin part, the nut can be insert-molded, and a nut in which a female thread is formed can be inserted into a mounting hole in the resin part, with the tip portion of the nut buckled and swaged to the resin part for attachment.
Nuts which are caused to buckle in this manner at the tip portion and attached to a resin part or the like are called "swaged nuts."
With swaged nuts, as with swaged collars, it is difficult to maintain a constant shape after being buckled and attached to a resin part. Therefore, the same problem arises as with swaged collars, namely that the inside shape of the tip portion of the nut is not a circle, and the center axes of the inside and outside diameters are offset.
Patent Document 1 discloses a metal collar and a fastening structure using the metal collar. The metal collar has a cylindrical portion and a flange portion at a base portion. A counterbore portion is disposed at the top edge of the resin part through-hole; an indented portion is disposed at the bottom edge of the resin part through-hole; this is where the flange portion enters. Pressing of the tip portion of the metal collar after insertion into the through-hole results in a buckling deformation to a "V" shape on the counterbore portion interior. By fastening a bolt through a washer to the female thread of the attached-to member, a resin part on which a metal collar is installed is in turn attached to the attached-to member. Patent Document 1 states that the metal collar can be prevented from falling out of the through-hole in the resin part, and that locking of the fastening member can be accomplished by the elastic restoring force of the buckled part of the metal collar.
The metal collar of Patent Document 1 is one in which the tip portion of a metal collar is bent into a "V" shape using a press or the like, and is subsequently elastically held by further pressing the attached-to member using a bolt; it is not one which firmly swages the tip portion to a resin part.

In the metal collar of Patent Document 1, the tip portion is not stiffly swaged to a resin part; however, a problem is that the shape after the above-described metal collar is buckled tends not to be constant.

Patent Document 2 pertains to a metal collar which can be simply and quickly attached to a resin part without use of a press. Patent Document 2 discloses a method for attaching a metal collar having a sleeve and a flange formed at one end of the sleeve to a resin part by deforming and buckling the end portion of the sleeve using a fastening tool having a male-threaded screw mandrel, and a jig having a female thread engaging with this male thread. In Patent Document 2, a metal collar tip portion can be buckled and attached to the resin part using a hand-held fastening tool, without use of a press.

However, the metal collar of Patent Document 2 is buckled and attached to a resin part, leading to the above-described problem in that the shape after buckling and attaching the metal collar tends not to be constant.

Therefore, a swaged collar has been sought with which, when the tip portion is buckled and attached to a resin part, buckling can be applied in axial symmetry with good repeatability to form a constant shape. That is, a swaged collar has been sought with which, in a swaged collar with a circular tip portion, the inside diameter of the buckled portion is a circle, and there is no center axis offset between the inside diameter and the outside diameter. For swaged collars in which the tip portion is oval, a swaged collar has been sought in which the inside of the buckled portion is similar in shape to the original oval.

Also, a swaged nut has been sought with which, when the tip portion is buckled and attached to a resin part, buckling can be applied in axial symmetry with good repeatability to form a constant shape.

Prior Art References

Patent Documents

Patent Document 1: Japanese Published Unexamined Patent Application H11-101218
Patent Document 2: Japanese Published Unexamined Patent Application 2013-1050

**Non-Patent Documents**

Non-Patent Document: S.P. Timoshenko and J.M. Gere, Theory of Elastic Stability, McGraw-Hill, 1961

**Summary of the Invention**

**Problem the Invention Seeks to Solve**

Therefore, the object of the present invention is to provide a swaged collar with which, when the tip portion is buckled and attached to a resin part, buckling occurs in axial symmetry with good repeatability to form a constant shape.

Another object is to provide a swaged nut with which, when the tip portion is buckled and attached to a resin part, buckling can be applied in axial symmetry with good repeatability to form a constant shape.

**Means for Solving the Problems**

In the present invention, a swaged collar is caused to buckle using the results from a theoretical failure analysis of a hollow cylinder in the axial direction, therefore by defining the length relative to outside diameter and the thickness of thin-walled portions, an axially symmetrical widening of the diameter can be achieved in a "V" shape so that the midsection in the axial direction of the thin-walled portion has a maximum diameter, and buckling occurs in a simple shape.

To achieve this object, a first aspect of the present invention is a swaged collar comprising a cylindrical sleeve with a thick-walled portion, a thin-walled portion with a wall thickness thinner than the thick-walled portion, and a step portion between the thick-walled portion and the thin-walled portion; and

a flange formed on the thick-walled portion side of the sleeve, with a larger diameter than the sleeve;

wherein a through-hole with a circular cross section is formed, penetrating the sleeve and the flange;

the thin-walled portion is buckled to form a buckled portion with the sleeve inserted in a mounting hole in the resin part, and the resin part is attached by being sandwiched between the flange and the buckled portion; and

wherein, assuming an outside diameter D for the thick-walled portion, a wall thickness t, a length L, and a Poisson ratio $\gamma$, the following relational expressions are satisfied:

$$r = (D - t)/2$$

$$m = \frac{L}{\pi^4 \sqrt{\dfrac{r^2 t^2}{12(1-\gamma^2)}}}$$

$$1.2 < m < 1.8$$

When outside diameter D of the thin-walled portion, wall thickness t, length L, and Poisson ratio $\gamma$ satisfy these relational expressions, the thin-walled portion buckles in m half-waves in the axial direction. The diameter is widened into an axially symmetrical "V" cross sectional shape, so the center portion in the axial direction of the thin-walled portion has the maximum diameter. Deformation occurs in a simple shape, so a fixed-shape metal collar can be obtained, and no abnormal deformation of the buckled portion occurs. The inside diameter of a buckled portion in which the thin-walled portion has buckled therefore becomes a circle, and there is no offset between the center axes of the inside and outside diameters of the buckled portion.

A second aspect of the present invention is a swaged collar comprising a sleeve, oval in cross section, with a thick-walled portion, a thin-walled portion with a wall thickness thinner than the thick-walled portion, and a step portion between the thick-walled portion and the thin-walled portion; and

a flange formed on the thick-walled portion side of the sleeve, with a larger diameter than the sleeve;

wherein a through-hole, oval in cross section, is formed, penetrating the sleeve and the flange;

the thin-walled portion is buckled to form a buckled portion with the sleeve inserted in a mounting hole in the resin part, and the resin part is attached by being sandwiched between the flange and the buckled portion; and

wherein the following relational expressions are satisfied, assuming a length C for the circumference at the center point of the inner and outer surfaces of the thin-walled portion, a wall thickness t for the thin-walled portion, a length L, and a Poisson ratio $\gamma$:

$$r = C / 2\pi$$

$$m = \frac{L}{\pi^4 \sqrt{\dfrac{r^2 t^2}{12(1-\gamma^2)}}}$$

$$1.2 < m < 1.8$$

Even when the swaged collar sleeve cross section is oval, the approximate value r of the radius of the thin-walled portion is found from the length C of the circumference at the center point of the inner and outer surfaces of the thin-walled portion, and conditions for buckling in a stable shape can be found using the same expression as for a cylindrical sleeve.

Assuming a wall thickness for the thick-walled portion of t2, it is preferable that: t2/t > 1.5.

If the wall thickness of the thick-walled portion is sufficiently thicker than the wall thickness of the thin-walled portion, the thick-walled portion will tend not to deform when the thin-walled portion is caused to buckle, making it possible to buckle only the thin-walled portion.

One or more projecting portions are preferably formed on the sleeve-side surface of the flange, to bite into the resin part.

When a projecting portion is formed to bite into the resin part, that biting into the resin part by the projecting portion enables affixing so that the swaged collar does not move relative to the resin part.

Projecting portions are preferably ring shaped.

Alternatively, it is preferable for projecting portions to extend in radial straight lines.

The swaged collar is preferably attached to a resin part having an indented portion for containing the swaged collar flange, and a counterbore portion for containing the buckled portion of the swaged collar.

When an indented portion and a counterbore portion are provided in a resin part, the flange and the buckled portion do not protrude out from the resin part surface, and interference with other parts is less likely to occur.

A third aspect of the present invention is a swaged nut comprising a cylindrical sleeve with a thick-walled portion, a thin-walled portion with a wall thickness thinner than the thick-walled portion, and a step portion between the thick-walled portion and the thin-walled portion; and

a flange formed on the thick-walled portion of the sleeve, with a larger diameter than the sleeve;

wherein a through-hole is formed with a circular cross section, penetrating the sleeve and the flange;

a female thread is formed in the through-hole of the thick-walled portion;

the thin-walled portion is buckled to form a buckled portion with the sleeve inserted in a mounting hole in the resin part, and the resin part is attached by being sandwiched between the flange and the buckled portion; and

assuming an outside diameter D for the thin-walled portion, a wall thickness t, a length L, and a Poisson ratio $\gamma$, the following relational expressions are satisfied:

$$r' = (D - t)/2$$

$$m = \frac{L}{\pi^4 \sqrt{\dfrac{r^2 t^2}{12(1-\gamma^2)}}}$$

$$1.2 < m < 1.8$$

For swaged nuts in which a female thread is formed in the through-hole on the inside of the thick-walled portion of the swaged collar as well, the deformation when the thin-walled portion buckles is the same as the deformation when the thin-walled portion of a swaged collar buckles. Therefore, the conditions for a swaged nut to buckle in a stable shape can be found using the same expressions as used to find the conditions for a swaged collar to buckle in a stable shape.

Assuming a wall thickness t2 for the thick-walled portion, it is preferable that: t2/t > 1.5.

One or more projecting portions are preferably formed on the sleeve-side surface of the flange to bite into the resin part.

Projecting portions are preferably ring shaped.

Alternatively, projecting portions preferably extend in radial straight lines.

A swaged nut is unable to rotate relative to a resin part due to the projecting portions extending in straight lines in the radial direction, and is less likely to loosen.

The swaged nut is preferably attached to a resin part having an indented portion for containing the swaged nut flange, and a counterbore portion for containing the buckled portion of the swaged collar.

Effect of the Invention

According to the present invention, when the tip portion is buckled and attached to a resin part, the swaged collar buckles in axial symmetry with good repeatability to form a constant shape, and abnormal buckling is less likely to occur. Therefore, the inside diameter of the swaged collar buckled portion has a fixed shape, and there is less likelihood of an offset between the center axes of the inside and outside diameters of the buckled portion.

Also, a swaged nut which buckles in axial symmetry with good repeatability to form a constant shape can be obtained when the tip portion thereof is buckled and attached to a resin part.

**Brief Description of the Drawings**

Fig. 1:    A top plan view of a swaged collar in a first embodiment of the invention.
Fig. 2:    A front elevation of the swaged collar of Fig. 1.
Fig. 3:    A bottom plan view of the swaged collar of Fig. 1.

Fig. 4:     A cross section along line A-A in Fig. 1, in the swaged collar of Fig. 1.

Fig. 5:     A cross section showing the swaged collar of Fig. 1 set in a resin part.

Fig. 6:     A cross section showing the thin-walled portion of the swaged collar of Fig. 1, buckled and attached to a resin part.

Fig. 7:     A cross section in which a swaged collar of the first embodiment of the invention is attached to a resin part, and the resin part is mounted on an attached-to member using a bolt and nut.

Fig. 8:     A top plan view of a swaged nut in a second embodiment of the invention.

Fig. 9:     A front elevation of the swaged nut of Fig. 8.

Fig. 10:    A bottom plan view of the swaged nut of Fig. 8.

Fig. 11:    A cross section along line B-B in Fig. 8, of the swaged nut of Fig. 8.

Fig. 12:    An expanded front elevation of the C part shown in Fig. 9 of the swaged nut of Fig. 8.

Fig. 13:    A cross section showing the swaged nut of Fig. 8 set into a resin part.

Fig. 14:    A cross section showing the thin-walled portion of the swaged nut of Fig. 8, buckled and attached to a resin part.

Fig. 15:    A perspective view of a swaged collar in a third embodiment of the invention.

Fig. 16:    A cross section along line E-E in Fig. 15 of the swaged collar of Fig. 15.

Embodiments of the Invention

We shall now explain, with reference to the drawings, a swaged collar 10 according to a first embodiment of the invention and a swaged nut 20 according to a second embodiment thereof.

(First Embodiment)

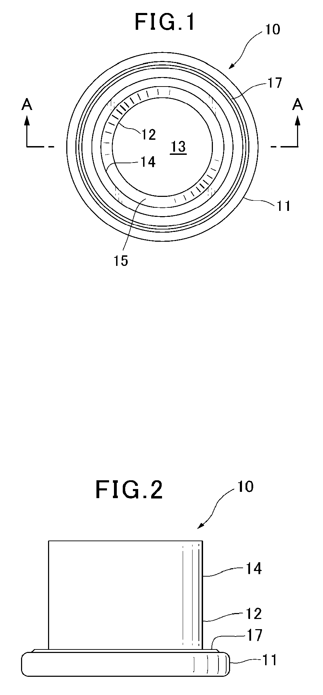

The first embodiment corresponds to the first aspect. Referring to Figs. 1 through 6, we shall explain the swaged collar 10 of the first embodiment of the invention and the state wherein the swaged collar 10 is attached to the resin part 30.

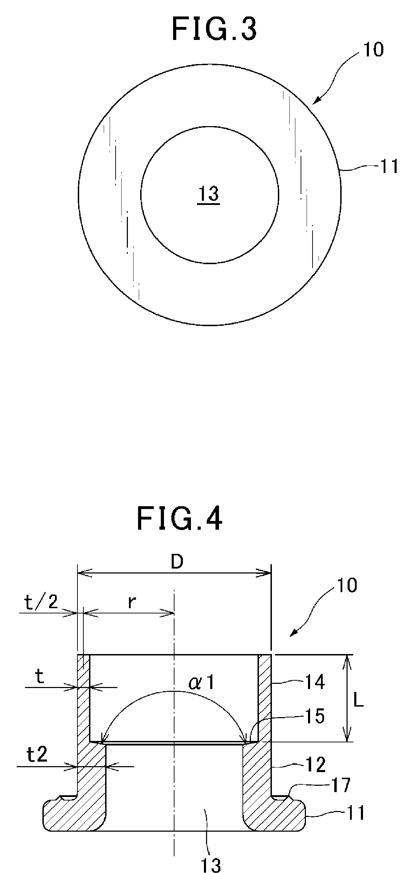

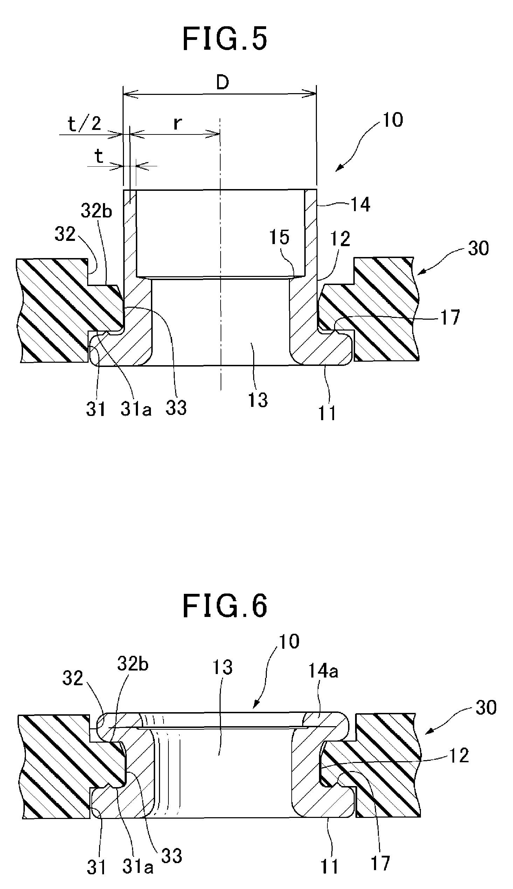

Fig. 1 is a top plan view of a swaged collar 10 in the first embodiment of the invention. Fig. 2 is a front elevation; Fig. 3 is a bottom plan view; Fig. 4 is a cross section along line A-A in Fig. 1. Fig. 5 is a cross section showing the swaged collar 10 of Fig. 1 set into the resin part 30. Fig. 6 is a cross section showing the thin-walled portion 14 of the swaged collar 10, buckled to become buckled portion 14a, and attached to the resin part 30.

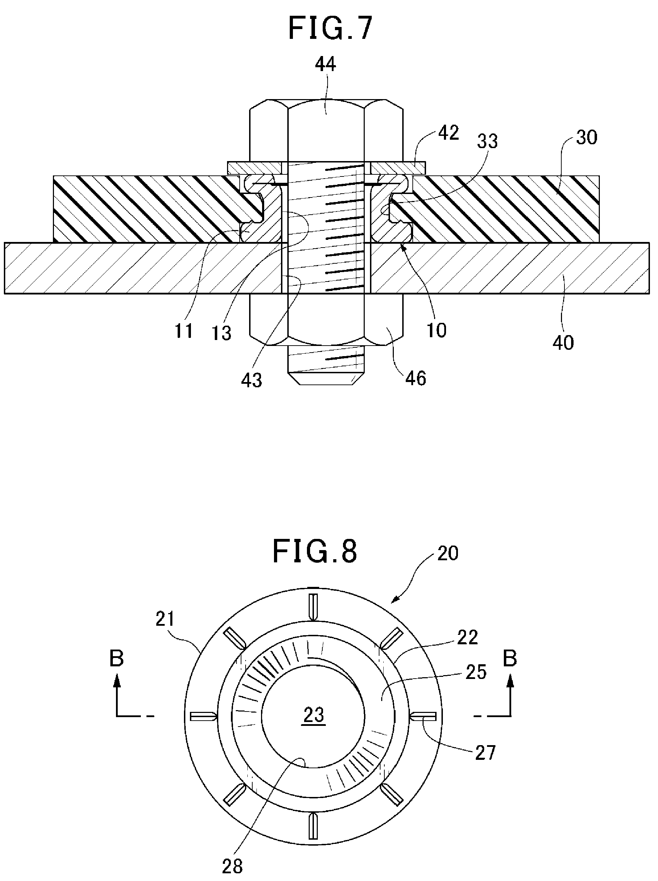

Fig. 7 is a cross section of a portion showing the state wherein a resin part 30, to which a swaged collar 10 is attached, is affixed to the attached-to member 40 using a bolt 44 and a nut 46.

In the explanation of the first embodiment, the top sides of Figs. 4 through 7 correspond to the up direction.

The swaged collar 10 comprises a cylindrical sleeve and a flange 11, formed at one end of the sleeve, with a larger diameter than the sleeve. The sleeve has a thick-walled portion 12 with thick walls adjacent to flange 11, and a thin-walled portion 14 with thin walls, formed on the side far from the flange 11, with a thinner wall thickness than the thick-walled portion 12.

A through-hole 13 penetrating the swaged collar 10 in the axial direction is formed on the inside of the flange 11, the thick-walled portion 12, and the thin-walled portion 14. The outside diameter of the thin-walled portion 14 is the same as the outside diameter of the thick-walled portion 12. The inside diameter of the through-hole 13 in the thin-walled portion 14 part is larger than the inside diameter of the through-hole 13 in the thick-walled portion 12 part. A sloped step portion 15 is provided between the inside part of the thick-walled portion 12 of the through-hole 13 and the inside part of the thin-walled portion 14 of the through-hole 13. The angle $\alpha 1$ formed by the opposite parts of the step portion 15 is approximately 160°.

The thin-walled portion 14 has a thin wall thickness; therefore, it can easily deform when the swaged collar 10 is pushed in the axial direction, and can be buckled and affixed to the resin part 30.

(Relationship between outside diameter, wall thickness and length of the thin-walled portion)

Referring to Fig. 4, we shall now explain the dimensions of each part of the swaged collar 10 and in particular, the relationship between the outside diameter, wall thickness and length of the thin-walled portion 14.

The outside diameter of the thick-walled portion 12 and the thin-walled portion 14 (sleeve) shall be called D.

The wall thickness of the thick-walled portion 12 shall be t2.

The wall thickness of the thin-walled portion 14 shall be t, and the length thereof shall be L. Assuming a distance r between the center axis of the swaged collar 10 and the center portion of the thin-walled portion 14 in the radial direction,

$$r = (D-t)/2 \qquad (1)$$

There are various theories concerning failure of a hollow cylinder in the axial direction; Non-Patent Document 1 is representative of such theories.

With a wall thickness of approximately $r/t = 10$, buckling behavior is relatively stable.
As the buckling critical load increases, deformation due to yielding of the material occurs rather than elastic buckling. Expansion in the cylinder radial direction due to friction on the end surface, etc. is blocked, so the initial buckling shape is axially symmetrical.

A deformation shape resulting from buckling is postulated assuming a traditional procedure referred to as the energy method for axisymmetric buckling, and a buckling load and buckling mode are found by equating work done by external forces to the amount of increase in internal distortion energy associated with deformation to find the minimum value for external force. This method starts with first hypothesizing a deformation shape.

For a hollow cylinder, it is assumed that for the axial direction displacement, the hollow cylinder deforms by m half-waves in the axial direction. m is expressed by Equation (2).
The deformation half-wave is L/m.

$$m = \frac{L}{\pi^4 \sqrt{\dfrac{r^2 t^2}{12(1-\gamma^2)}}} \qquad (2)$$

Here, $\gamma$ is the Poisson ratio for the swaged collar 10.

In the present invention, the thin-walled portion outside diameter D, wall thickness t, and length L are set so that m falls within the range:

$$1.2 < m < 1.8 \qquad (3).$$

It is preferable to set D, t, and L so that m is in the range of $1.3<m<1.5$. When D and t are predetermined, L is set accordingly.

The top end portion of the thin-walled portion 14 is difficult to expand in diameter due to friction with the tool, and the bottom end portion of the thin-walled portion 14 is contiguous with the thick-walled portion 12, making it difficult to expand in diameter. When m is within the range shown in Exp. (3), the length L of the thin-walled portion 14 is between 1.2 and 1.8 times the half-wave of the thin-walled portion 14 deformation and will not exceed twice the half-wave. Therefore, when a thin-walled portion 14 of length L is pushed in the axial direction, it does not expand in diameter in such a way that the diameter reaches the maximum value at multiple positions along the length L. It is expanded in diameter in an axially symmetrical way so that it reaches a maximum diameter at one position along length L. That is, the cross section in the axial direction is diameter-expanded in an axially symmetric way into a "V" shape, and the buckled portion 14a assumes a simple buckled shape. The inside diameter of the buckled portion 14a of thin-walled portion 14 is therefore a circle, and no offset between the center axes of the inside and outside diameters of the buckled portion 14a occurs.

When the thin-walled portion 14 is buckled, the thick-walled portion 12 wall thickness t2 must be somewhat thicker than the wall thickness t of the thin-walled portion 14 to keep the thick-walled portion 12 from deforming.
It is preferable for the wall thickness t2 of the thick-walled portion 12 to be greater than 1.5 times the wall thickness t of the thin-walled portion 14.
That is, an arrangement is made so that

$$t2/t > 1.5 \qquad (4)$$

Any material may be used for the swaged collar 10 so long as it is plastically deformable. Examples include iron, aluminum, etc. Also, any surface treatment on the swaged collar 10 is acceptable as long as it can withstand deformation during swaging.
For example, plating may be applied to prevent corrosion. In addition, even non-metal materials may be used so long as the material is plastically deformable.

A projecting portion 17 extending in the circumferential direction is placed on the surface of the thick-walled portion 12 side of the flange 11. When a swaged collar 10 is attached to a resin part 30, the projecting portion 17 bites into the surface around the mounting hole 33 in the resin part 30, affixing it so that the swaged collar 10 does not move relative to the resin part 30. The projecting portion 17 may be one which extends outward in the radial direction, as in the second embodiment described below.

Fig. 5 is a cross section showing the first embodiment swaged collar 10 set into the resin part 30.

A mounting hole 33 is formed in the resin part 30. The inside diameter of the mounting hole 33 is either equal to or slightly larger than the outside diameter D of the sleeve (thick-walled portion 12 and thin-walled portion 14).

A countersunk hole-shaped indentation 31 is disposed to house the flange 11 of the swaged collar 10 at the bottom portion of mounting hole 33. The inside diameter of the indentation 31 is larger than the outside diameter of the flange 11; its height in the axial direction is approximately equal to the thickness of the flange 11, and the flange 11 can be housed inside the indentation 31.

A countersunk hole-shaped counterbore portion 32 is provided at the top portion of the mounting hole 33 to house the buckled portion 14a in which the tip portion of the swaged collar 10 is deformed. The inside diameter of the counterbore portion 32 is larger than the outside diameter of the buckled portion 14a created by the buckling of the thin-walled portion 14. The thin-walled portion 14 deforms to form buckled portion 14a. The length in the axial direction of the thin-walled portion 14 of the swaged collar 10 is determined so that the buckled portion 14a enters into the counterbore portion 32.

When an indentation 31 and a counterbore portion 32 are formed on the resin part 30, the part where the swaged collar 10 is attached can be prevented from interfering with other parts without extraordinary protrusion from the surface of the resin part 30.

It is also acceptable to provide no indentation 31 or counterbore portion 32. If an indentation 31 is not provided, the flange 11 protrudes from the bottom surface of the resin part 30. If a counterbore portion 32 is not provided, the buckled portion 14a protrudes from the top surface of the resin part 30.

With the swaged collar 10 set in the resin part 30, the height of the step portion 15 is essentially the same height as the bottom surface of the counterbore portion 32 on the resin part 30. By so doing, it is possible to distort only the thin-walled portion 14 beyond the step portion 15, so that a small pressing force is sufficient when deforming, and the effect on the resin part 30 is also small.

In the state of Fig. 5, a top end surface 31 a on the indentation 31 contacts the peak portion of the projecting portion 17, and the projecting portion 17 does not bite into the top surface of the indentation 31 in the resin part 30.

Fig. 6 is a cross section showing the thin-walled portion 14 of the swaged collar 10 of Fig. 1, buckled and attached to the resin part 30. Using a press or a hand-held fastening tool, the bottom surface of the flange 11 on the swaged collar 10 and the top end surface of the thin-walled portion 14 are pressed in the axial direction from the state shown in Fig. 5, causing the thin-walled portion 14 of the swaged collar 10 to buckle.

The outside diameter of the thin-walled portion 14 is widened to be larger than the inside diameter of the mounting hole 33 on resin part 30, and becomes the buckled portion 14a. The buckled portion 14a contacts the bottom end surface 32b of the counterbore portion 32, and is contained inside the counterbore portion 32.

The surface on the sleeve side of the flange 11 contacts the top end surface 31 a of the indentation 31 in the resin part 30. The projecting portion 17 on the top surface of the flange 11 bites into the top end surface 31 a of the indentation 31 in resin part 30.

The circumference portion of the mounting hole 33 in resin part 30 is sandwiched by the flange 11 contained in the indentation 31 and the buckled portion 14a which has entered into the counterbore portion 32; the swaged collar 10 is attached in such a way that it does not fall out from the resin part 30.

The outside diameter D, wall thickness t and length L of the thin-walled portion 14 satisfy predetermined relational expressions described above; therefore, the diameter of the mid-section in the axial direction of length L is widened, and the buckled portion 14a formed by buckling the thin-walled portion 14 of the swaged collar 10 has a simple shape. The inside diameter is therefore a circle, and the center axis of the inside and outside diameters are not offset.

With the swaged collar 10 attached to the resin part 30, the top surface of the buckled portion 14a is essentially coplanar with the top surface of the resin part 30, and the bottom surface of the flange 11 is essentially coplanar with the bottom surface of the resin part 30.

The swaged collar 10 does not protrude out from the resin part 30.

Fig. 7 shows the state in which, using bolt 44 and nut 46, a resin part 30 to which a swaged collar 10 is attached is in turn affixed to an attached-to member 40. The positions of the through-hole 13 in swaged collar 10 attached to resin part 30 and the attaching hole 43 in attached-to member 40 are matched; bolt 44 is inserted from the resin part 30 side through washer 42, and the tip portion of bolt 44 comes out the attaching hole 43 in attached-to member 40. The female thread on nut 46 engages the male thread on the tip portion of bolt 44, and resin part 30 is fastened to the attached-to member 40.

In the reverse of Fig. 7, bolt 44 can also be inserted from the attached-to member 40 side.

The swaged collar 10 is attached to the mounting hole 33 in resin part 30 so as not to fall out; therefore, even if fastened by bolt 44 and nut 46, no major force acts on the resin part 30, and attachment can be made stable.

Using the first embodiment of the invention, when the thin-walled portion 14 of the swaged collar 10 is buckled and attached to the resin part, the thin-walled portion 14 is axisymmetrically expanded to a "V" shape in section in the axial direction, and the buckled portion assumes a simple shape. Therefore, the inside diameter of the swaged collar buckled portion is a circle, and the center axes of the inside and outside diameters of the buckled portion are not offset.

(Second Embodiment)

The second embodiment corresponds to the third aspect. Referring to Figs. 8 through 14, we shall now explain the swaged nut 20 of the second embodiment of the invention, and the state whereby the swaged nut 20 is attached to the resin part 30. The swaged nut 20 includes a female thread formed in a through-hole on the inside of the thick-walled portion of the swaged collar 10 in the first embodiment. In the swaged nut 20, as in the swaged collar 10, the thin-walled portion can be buckled and attached to resin part 30.

When the swaged nut 20 is used, it is possible to cause the bolt to directly engage the swaged nut 20, and not use a nut.

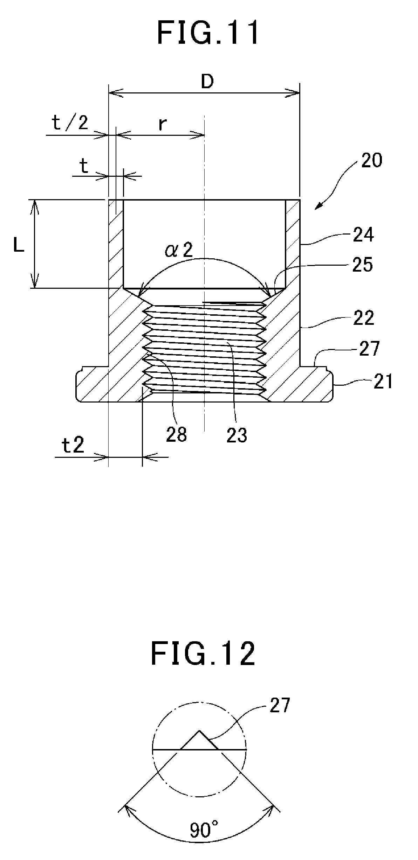

In the explanation of the second embodiment, the top sides of Figs. 11, 13, 14 are explained as the top.

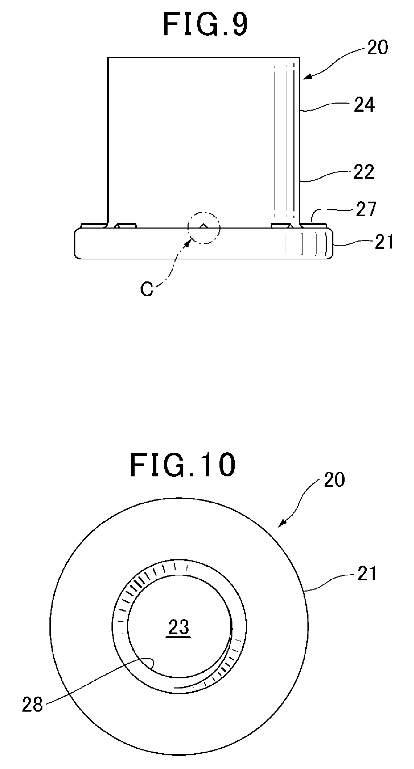

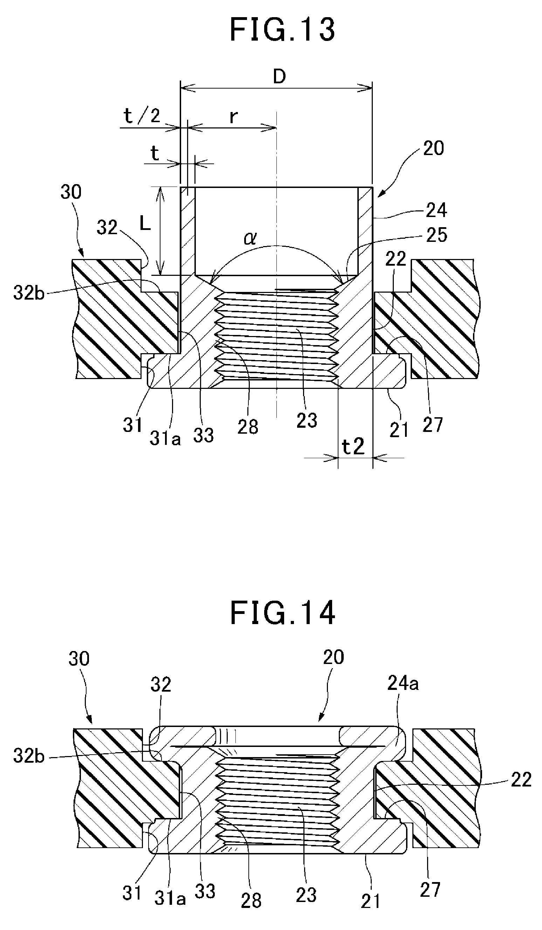

Fig. 8 is a top plan view of a swaged nut 20 in a second embodiment of the invention. Fig. 9 is a front elevation; Fig. 10 is a bottom plan view; Fig. 11 is a cross section along line B-B in Fig. 8. Fig. 12 is an expanded front elevation of the C part shown in Fig. 9 of swaged nut 20. Fig. 13 is a cross section showing the swaged nut 20 of Fig. 8, set in the resin part 30. Fig. 14 is a cross section showing the thin-walled portion 24 of the swaged nut 20 of Fig. 8, buckled to become buckled portion 24a, and attached to the resin part 30.

The swaged nut 20 comprises a cylindrical sleeve and a flange 21, formed at one end of the sleeve, with a larger diameter than the sleeve. The sleeve comprises a thick-walled portion 22 with thick walls, adjacent to flange 21, and a thin-walled portion 24, formed on the far side from the flange 21, and having a thinner wall thickness than the thick-walled portion 22. A sloped step portion 25 is provided between the thick-walled portion 22 and the thin-walled portion 24.

As shown in Fig. 11, the angle $\alpha2$ formed by the opposite parts of the step portion 25 is approximately 120°.

A through-hole 23 penetrating the swaged nut 20 in the axial direction is formed on the inside of the flange 21, thick-walled portion 22 and thin-walled portion 24.

The outside diameter of the thin-walled portion 24 is the same as the outside diameter of the thick-walled portion 22. The inside diameter of the through-hole 23 in the thin-walled portion 24 part is larger than the inside diameter of the through-hole 23 in the thick-walled portion 22 part. A sloped step portion 25 is provided between the inside part of the thick-walled portion 22 of through-hole 23 and the inside part of the thin-walled portion 24 of through-hole 23.

The thin-walled portion 24 has a thin wall thickness; therefore, it can easily deform when the swaged collar 20 is pushed in the axial direction and can be buckled and affixed to the resin part 30. A female thread 28 is formed in the part on the inside of the thick-walled portion 22 of the through-hole 23.

Fig. 11 shows the dimensions of each part of the swaged nut 20. For dimensions of the swaged nut 20, we shall use the same dimensions and reference numerals as for the swaged collar 10 explained with reference to Fig. 4.

The outside diameter of the thick-walled portion 22 and the thin-walled portion 24 (sleeve) shall be called D. The wall thickness of the thick-walled portion 22 shall be t2. The wall thickness of the thin-walled portion 24 shall be t, and the length thereof L. The distance r between the center axis of the swaged nut 20 and the radial direction center of the thin-walled portion 24 shall be r. Expressions (1) through (4), explained relative to the swaged collar 10 in the first embodiment, shall also apply to the dimensions of each part of the swaged nut 20.

As in the case of the first embodiment swaged collar 10, any material may be used as the material of the swaged nut 20, as long as it is elastically deformable. Examples include iron, aluminum, etc.

As shown in Fig. 8, eight projecting portions 27 extending in the radial direction are provided on the surface at the thick-walled portion 22 side of the flange 21.

Fig. 12 is an expanded front elevation of the C part shown in Fig. 9 of swaged nut 20. The cross section of projecting portions 27 is a triangle with an apex angle of 90°.

When a swaged nut 20 is attached to a resin part 30, the projecting portions 27 bites into the top end surface 31a of the indentation 31 formed in the resin part 30, affixing the swaged nut 20 so that it does not move relative to the resin part 30. In particular, when a bolt is screwed into a swaged nut 20, the swaged nut 20 is affixed so that it does not rotate.

Fig. 13 is a cross section showing the second embodiment swaged nut 20 set in a resin part 30.

A mounting hole 33 is formed in the resin part 30. The inside diameter of the mounting hole 33 is either equal to or slightly larger than the outside diameter D of the sleeve (thick-walled portion 22 and thin-walled portion 24). A countersunk hole-shaped indentation 31 is disposed to house the flange 21 of the swaged nut 20 at the bottom portion of mounting hole 33. The inside diameter of the indentation 31 is larger than the outside diameter of the flange 21; its height in the axial direction is approximately equal to the thickness of the flange 21, and the flange 21 can be housed inside the indentation 31.

A countersunk hole-shaped counterbore portion 32 is provided at the top portion of the mounting hole 33 to house the buckled portion 24a in which the tip portion of the swaged nut 20 is deformed. The inside diameter of the counterbore portion 32 is larger than the outside diameter of the buckled portion 24a created by the buckling of the thin-walled portion 24. The thin-walled portion 24 deforms to form buckled portion 24a. The length in the axial direction of the thin-walled portion 24 of the swaged nut 20 is determined so that the buckled portion 24a goes into the counterbore portion 32. When an indentation 31 and a counterbore portion 32 are formed on the resin part 30, the part where the swaged nut 20 is attached can be prevented from interfering with other parts, without extraordinary protrusion from the surface of resin part 30, to which no swaged nut 20 is attached.

It is also possible that no indentation 31 or counterbore portion 32 is provided. If an indentation 31 is not provided, the flange 21 protrudes from the bottom surface of the resin part 30. If a counterbore portion 32 is not provided, the buckled portion 24a protrudes from the top surface of the resin part 30.

With the swaged nut 20 set in the resin part 30, the height of the step portion 25 is essentially the same height as the bottom surface of the counterbore portion 32 on the resin part 30. By so doing, it is possible to distort only the thin-walled portion 24 beyond the step portion 25, so that a small pressing force is sufficient when deforming, and the effect on the resin part 30 is also small.

In Fig. 13, a top end surface 31a on the indentation 31 contacts the peak portion of the projecting portion 27, and the projecting portion 27 does not eat into the top surface of the indentation 31 in the resin part 30.

Fig. 14 is a cross section showing the thick-walled portion 24 of the swaged nut 20 of Fig. 8, buckled to become buckled portion 24a and attached to the resin part 30. Using a press or a hand-held fastening tool, the bottom surface of the flange 21 on the swaged nut 20 and the top end surface of the thin-walled portion 24 are pressed in the axial direction from the state shown in Fig. 13, buckling the thin-walled portion 24 of the swaged nut 20. The outside diameter of the thin-walled portion 24 is widened to be larger than the inside diameter of the mounting hole 33 on resin part 30, and becomes buckled portion 24a. The buckled portion 24a contacts the bottom end surface 32b of the counterbore portion 32, and is contained inside the counterbore portion 32.

The surface on the sleeve side of the flange 11 contacts the top end surface 31a of the indentation 31 in resin part 30. The projecting portion 27 on the top surface of the flange 21 bites into the top end surface 31a of the indentation 31 in resin part 30.

The circumference portion of the mounting hole 33 in resin part 30 is sandwiched by the flange 21 contained in the indentation 31 and the buckled portion 24a which has entered into the counterbore portion 32; the swaged nut 20 is attached in such a way that it does not fall out from the resin part 30.

When attaching the swaged nut 20 of the second embodiment, as well, the outside diameter D, wall thickness t and length L of the thin-walled portion 24 satisfy the above-described predetermined relational expressions in the same way as when the swaged collar 10 of the first embodiment is attached. Therefore, the thin-walled portion 24 of a swaged nut 20 of length L is axisymmetrically widened in diameter so that the mid-section in the axial direction reaches a maximum diameter, and the buckled portion 24a has a simple shape. Hence, the inside diameter of the buckled portion is a circle, and the center axes of the inside and outside diameters of the buckled portion are not offset.

With the swaged nut 20 attached to the resin part 30, the top surface of the buckled portion 24a is essentially coplanar with the top surface of the resin part 30, and the bottom surface of the flange 21 is essentially coplanar with the bottom surface of the resin part 30.
The swaged nut 20 does not protrude out from the surface of resin part 30.

Bolt 44 can be inserted into a swaged nut 20 attached to the resin part 30 shown in Fig. 14, affixing it to attached-to member 40. Alternatively, still another part can be attached.

In the second embodiment of the present invention, when the thin-walled portion 24 of the swaged nut 20 is buckled and attached to the resin part, the thin-walled portion 24 of length L is axisymmetrically widened in diameter so that the mid-section in the axial direction reaches a maximum diameter, and the buckled portion has a simple shape. The inside diameter of the swaged nut buckled portion is therefore a circle, and the center axes of the inside and outside diameters of the buckled portion are not offset.

(Third Embodiment)

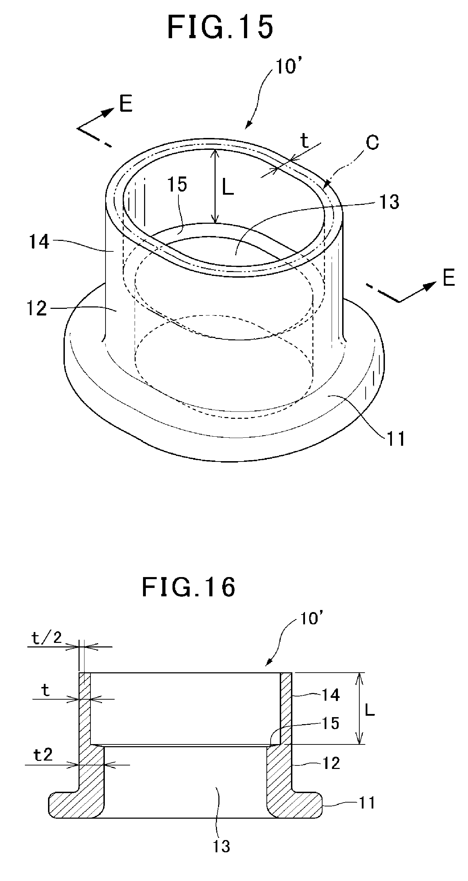

The third embodiment corresponds to the second aspect. Fig. 15 is a perspective view of a swaged collar 10' in a third embodiment of the invention. Fig. 16 is a cross section along line E-E in Fig. 15 of the swaged collar 10' of Fig. 15. Each part of the swaged collar 10' of the third embodiment is indicated by the same reference numerals as were used for the swaged collar 10 of the first embodiment. In the swaged collar 10' of the third embodiment, the cross sections of the thin-walled portion 14, thick-walled portion 12 (sleeve), and through-hole 13 are not circular but oval, and differ on this point from the first embodiment swaged collar 10. Other points are the same as the first embodiment swaged collar 10.

The cross sections of the swaged collar 10' thin-walled portion 14, thick-walled portion 12 (sleeve), and through-hole 13 may also be a combination of arcs and straight lines instead of an oval.

The swaged collar 10' comprises a sleeve, oval in cross section and a flange 11, formed at one end of the sleeve, with a larger diameter than the sleeve. The sleeve has a thick-walled portion 12 with thick walls adjacent to flange 11 and a thin-walled portion 14 with thin walls, formed on the far side from the flange 11.

A through-hole 13 penetrating the swaged collar 10' in the axial direction is formed on the inside of the flange 11, thick-walled portion 12 and thin-walled portion 14. The cross section of through-hole 13 is oval. A sloped step portion 15 is provided between the inside part of the thick-walled portion 12 of the through-hole 13 and the inside part of the thin-walled portion 14 of the through-hole 13.

The length of the perimeter at the midpoint between the inside and outside surfaces of the thin-walled portion 14 shall be called C. The wall thickness of the thick-walled portion 12 shall be t2. The wall thickness of the thin-walled portion 14 shall be t, and the length thereof shall be L. Using r as an approximation for the radius at the midpoint in the wall thickness direction of the thin-walled portion 14,

$$r = C \, / \, 2\pi \qquad (5)$$

The dimensions of each part of the swaged collar 10' are also expressed by the same Expressions (2) and (6) discussed for the first embodiment swaged collar 10.

$$m = \frac{L}{\pi^4 \sqrt{\dfrac{r^2 t^2}{12(1-\gamma'^2)}}} \qquad (6)$$

Here, $\gamma'$ is the Poisson ratio for the swaged collar 10'.

In the present invention, the thin-walled portion outside diameter D, wall thickness t and length L are set so that m falls within the range:

$$1.2 < m < 1.8 \qquad (3).$$

It is preferable to set D, t and L so that m is in the range 1.3 < m < 1.5. When D and t are predetermined, L is set accordingly.

No projecting portion is provided on the thick-walled portion 12-side surface of the flange 11 on the swaged collar 10'. The same projecting portion may be provided on this surface as the projecting portion 17 extending circumferentially on the swaged collar 10 of the first embodiment, or the projecting portions 27 extending radially on the swaged nut 20 of the second embodiment.

An indentation 31 housing the flange 11 on the swaged collar 10' may also be provided in the bottom portion of the mounting hole 33 in resin part 30.

A counterbore portion 32 for housing the buckled portion 14a formed by deforming the thin-walled portion 14 of the swaged collar 10' may also be provided in the top portion of the mounting hole 33 in the resin part 30.

According to the third embodiment of the invention, when a thin-walled portion 14 of the swaged collar 10' is buckled and attached to a resin part, the thin-walled portion 14 is axisymmetrically expanded to a "V" shape cross section in the axial direction, and the buckled portion assumes a simple shape. Therefore, the inside shape of the swaged collar buckled portion has a certain shape similar to the oval of the original thin-walled portion 14, and there is no offset between the center axes of the inside and outside diameters of the buckled portion.

**Explanation of Reference Numerals**

10:  swaged collar
11:  flange
12:  thick-walled portion

13: through-hole
14: thin-walled portion
14a: buckled portion
15: step portion
17: projecting portion
20: swaged nut
21: flange
22: thick-walled portion
23: through-hole
24: thin-walled portion
24a: buckled portion
25: step portion
27: projecting portions
28: female thread
30: resin part
31: indentation
31a: top end surface
32: counterbore portion
32b: bottom end surface
33: mounting hole
40: attached-to member
42: washer
43: mounting hole
44: bolt
46: nut

**Claims**

1. A swaged collar comprising: a cylindrical sleeve with a thick-walled portion, a thin-walled portion with a wall thickness thinner than the thick-walled portion, and a step portion between the thick-walled portion and the thin-walled portion; and
a flange formed on the thick-walled portion side of the sleeve, with a larger diameter than the sleeve;
wherein a through-hole is formed with a circular cross section, penetrating the sleeve and the flange;
the thin-walled portion is buckled to form a buckled portion with the sleeve inserted in a mounting hole in the resin part, and the resin part is attached by being sandwiched between the flange and the buckled portion; and
wherein, assuming an outside diameter D for the thick-walled portion, a wall thickness t, a length L, and a Poisson ratio $\gamma$, the following relational expressions are satisfied:

$$r = (D - t)/2$$

$$m = \frac{L}{\pi^4 \sqrt{\dfrac{r^2 t^2}{12(1-\gamma^2)}}}$$

$$1.2 < m < 1.8$$

2. A swaged collar comprising a sleeve, oval in cross section, with a thick-walled portion, a thin-walled portion with a wall thickness thinner than the thick-walled portion and a step portion between the thick-walled portion and the thin-walled portion; and
a flange formed on the thick-walled portion side of the sleeve, with a larger diameter than the sleeve;
wherein a through-hole, oval in cross section, is formed, penetrating the sleeve and the flange;
the thin-walled portion is buckled to form a buckled portion with the sleeve inserted in a mounting hole in the resin part, and the resin part is attached by being sandwiched between the flange and the buckled portion; and wherein, assuming a length C for the circumference at the center point of the inner and outer surfaces of the thin-walled portion, a wall thickness t for the thin-walled portion, a length L, and a Poisson ratio $\gamma$, the following relational expressions are satisfied:

$$r = C / 2\pi$$

$$m = \frac{L}{\pi^4 \sqrt{\dfrac{r^2 t^2}{12(1-\gamma^2)}}}$$

$$1.2 < m < 1.8$$

3. The swaged collar of Claims 1 or 2, wherein:

assuming a wall thickness for the thick-walled portion of t2,
t2/t > 1.5.

4. The swaged collar of any one of Claims 1 through 3, wherein:

one or more projecting portions are formed on the sleeve-side surface of the flange to bite into the resin part.

5. The swaged collar of Claim 4, wherein:

the projecting portion has a ring shape.

6. The swaged collar of Claim 4, wherein:

the projecting portions extend in radial straight lines.

7. A swaged nut comprising: a cylindrical sleeve with a thick-walled portion, a thin-walled portion with a wall thickness thinner than the thick-walled portion, and a step portion between the thick-walled portion and the thin-walled portion; and
a flange formed on the thick-walled portion side of the sleeve, with a larger diameter than the sleeve;
wherein a through-hole is formed with a circular cross section, penetrating the sleeve and the flange;
a female thread is formed in the through-hole of the thick-walled portion;
the thin-walled portion is buckled to form a buckled portion with the sleeve inserted in a mounting hole in the resin part, and the resin part is attached by being sandwiched between the flange and the buckled portion; and
assuming an outside diameter D for the thin-walled portion, a wall thickness t, a length L and a Poisson ratio $\gamma$, the following relational expressions are satisfied:

$$r = (D - t)/2$$

$$m = \frac{L}{\pi^4 \sqrt{\dfrac{r^2 t^2}{12(1-\gamma^2)}}}$$

$$1.2 < m < 1.8$$

8. The swaged nut of Claim 7,
   wherein, assuming a wall thickness for the thick-walled portion of t2, t2/t > 1.5.

9. The swaged nut of Claims 7 or 8, wherein:

   one or more projecting portions are formed on the sleeve-side surface of the flange to bite into the resin part.

10. The swaged nut of Claim 9, wherein:

    the projecting portion has a ring shape.

11. The swaged nut of Claim 9, wherein:

    the projecting portions extend in radial straight lines.

# FIG.1

# FIG.2

# FIG.3

# FIG.4

EP 3 073 131 A1

## FIG.5

## FIG.6

18

# FIG.7

# FIG.8

# FIG.9

20
24
22
27
21
C

# FIG.10

20
21
23
28

# FIG.11

# FIG.12

## FIG.13

## FIG.14

# FIG.15

# FIG.16

## INTERNATIONAL SEARCH REPORT

| International application No. |
|---|
| PCT/JP2014/068728 |

A.  CLASSIFICATION OF SUBJECT MATTER
*F16B43/00*(2006.01)i, *F16B19/08*(2006.01)i, *F16B37/04*(2006.01)i

According to International Patent Classification (IPC) or to both national classification and IPC

B.  FIELDS SEARCHED

Minimum documentation searched (classification system followed by classification symbols)
F16B43/00, F16B19/08, F16B37/04

Documentation searched other than minimum documentation to the extent that such documents are included in the fields searched
Jitsuyo Shinan Koho          1922-1996   Jitsuyo Shinan Toroku Koho    1996-2014
Kokai Jitsuyo Shinan Koho    1971-2014   Toroku Jitsuyo Shinan Koho    1994-2014

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | JP 2013-1050 A  (Nippon Pop Rivets and Fasteners Ltd.), 07 January 2013 (07.01.2013), paragraphs [0032] to [0035]; fig. 6 to 9 & US 2012/0328825 A1    & EP 2538092 A2 & CN 102837286 A | 1-11 |
| Y | JP 7-91425 A  (Kitaura Corp.), 04 April 1995 (04.04.1995), paragraph [0014]; fig. 11 (Family: none) | 1-11 |
| Y | JP 10-82409 A  (Nippon Pop Rivets and Fasteners Ltd.), 31 March 1998 (31.03.1998), paragraphs [0008], [0018] (Family: none) | 1-11 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 September, 2014 (22.09.14) | 07 October, 2014 (07.10.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

24

**INTERNATIONAL SEARCH REPORT**

| International application No. |
|---|
| PCT/JP2014/068728 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2008-196516 A  (Calsonic Kansei Corp.), 28 August 2008 (28.08.2008), fig. 1, 7 to 12 (Family: none) | 4-6,9-11 |
| A | Microfilm of the specification and drawings annexed to the request of Japanese Utility Model Application No. 73517/1985(Laid-open No. 204014/1986) (Kitaura Corp.), 22 December 1986 (22.12.1986), fig. 10 to 11 (Family: none) | 1-11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11101218 B

- JP 2013001050 A

**Non-patent literature cited in the description**

- **S.P. TIMOSHENKO ; J.M. GERE.** Theory of Elastic Stability. McGraw-Hill, 1961